**Europäisches Patentamt**

**European Patent Office**

**Office européen des brevets**

(19)

(11) Publication number: **0 065 880**

**A1**

(12) **EUROPEAN PATENT APPLICATION**

(21) Application number: **82302672.9**

(22) Date of filing: **25.05.82**

(51) Int. Cl.³: **F 24 B 5/02**
**F 24 B 1/08, F 24 B 13/02**

(30) Priority: **27.05.81 ZA 813590**

(43) Date of publication of application:
**01.12.82 Bulletin 82/48**

(84) Designated Contracting States:
**AT BE CH DE FR GB IT LI LU NL SE**

(71) Applicant: **Notable Investments (Proprietary) Limited**
**Shop 6 The Village Essenlen Street**
**Pretoria Transvaal Province(ZA)**

(72) Inventor: **Kirkcaldy, Alan Gordon**
**1228 Prospect Street Hatfield**
**Pretoria Transvaal Province(ZA)**

(72) Inventor: **Laursen, Jorn**
**312 Murray Street Brooklyn**
**Pretoria Transvaal Province(ZA)**

(74) Representative: **JENSEN & SON**
**8 Fulwood Place High Holborn**
**London WC1V 6HG(GB)**

(54) **Heater assemblies.**

(57) Heater assemblies for coal-burning stoves may have a refractory unit (14) providing a fuel supply hopper (20), an ignition zone (24) with which the hopper is connected, a grate (26) at the lower part of the ignition zone, and a combustion region (22) extending upwardly from the ignition zone and being substantially separated from the hopper by a baffle (18). Secondary air has been supplied uncontrolled to the lower portion of the combustion zone from outside the heater.

In the present invention, the grate (26) beneath the ignition zone allows primary air to flow into the ignition and combustion zones from a supply zone (28) beneath the grate, and secondary air flows from the supply zone to the combustion zone through at least one opening (30) in the refractory means. Various other developments disclosed include an air pre-heater, sealing (14.2,14.3) for the refractory unit, and a cladding (12) for the heater.

FIG 3

**0065880**

Heater Assemblies

This invention relates to a heater for burning solid fuel, such as coal, including refractory means providing a cavity divided by a generally upward extending baffle, the cavity comprising a hopper on one side of the baffle for holding fuel to be burnt, a combustion zone at least partly on the other side of the baffle, and an ignition zone where fuel from the hopper is ignited.

A known commercial unit which has proved to be satisfactory for coal-burning stoves has a fuel supply hopper, an ignition zone with which the hopper is connected, a grate at the lower part of the ignition zone, and a combustion region extending upwardly from the ignition zone and being substantially separated from the hopper by a baffle. Secondary air was supplied uncontrolled to the lower portion of the combustion zone from outside the heater. In one form of unit, the secondary air was supplied to the lower region of the combustion zone through an opening in the baffle and, in another form, air was drawn directly from outside the heater through the side walls of the unit. Although the combustion zones were formed as chambers having shapes adapted to cause turbulence and mixing of combustible gases, the units did not meet the requirements with regard to smaller units, such as, for example, domestic heaters, where the unit is to be banked for a considerable amount of time, such as at night.

According to the present invention, there is provided a heater for burning solid fuel, the heater including refractory means providing a cavity divided by a generally upwardly extending baffle, the cavity comprising a hopper on one side of the baffle for holding fuel to be burnt, a combustion zone at least partly on the other side of the baffle, and an ignition zone where fuel from the hopper is ignited; a grate beneath the ignition zone for allowing primary air to flow into the ignition and combustion zones from a supply zone beneath the grate, and means for supplying secondary air from the supply zone to the combustion zone through at least one opening in the refractory means.

This enables the primary and secondary air to be pre-heated on passing through the supply zone and to the combustion zone. In order to enhance this pre-heating, the air may be guided through a pre-heater passage leading to or including the supply zone and leading to the grate. The arrangement also permits the flow of secondary air to be controlled as the flow of primary air is controlled.

The refractory means of the heater may comprise a unit cast from refractory material. This unit may be inserted into the assembly from the front of the assembly and may be replaceable. The refractory means may rest on a suitable base and may be located in position by back and side walls. Seals may be provided around edges of the unit and, if desired, around the periphery of the unit.

The secondary air may be supplied into the combustion zone through openings in the refractory means at opposite sides of the combustion zone. Passages leading to these openings may be formed between the refractory means and the walls of the heater locating the refractory means by providing suitable downwardly extending grooves extending from the openings in the refractory means. Openings may be provided in the base on which the refractory means is supported, if necessary, to allow air to reach the grooves.

The combustion chamber of the unit may be shaped to cause turbulence during mixing of combustion gases therein, particularly in the region where secondary air is supplied to the combustion zone. The baffle may be curved as it extends downwardly towards a surface on the opposite side of the combustion zone, and the combustion zone may then commence at a passage inclined upwardly away from the ignition zone and defined between the baffle and the opposite surface. The passage may curve around the lower part of the baffle and may be restricted where it curves. It may open into a wider upper part of the combustion zone.

One or more suitable inlets can open into the supply zone to allow air to be drawn into the supply zone so that primary air can pass upwardly through the grate. The inlet or inlets may open into the back of the heater, and flow of air through the inlet or inlets may be controlled by a control valve operable from the front of the heater. The supply of primary air through the grate and ignition and combustion zones can be controlled in this way, and the supply of secondary air will be simultaneously controlled. For certain combustion conditions, it may be desirable for tertiary air to enter the combustion zone. For this purpose a passage my pass to the combustion zone from a location communicating with the atmosphere, for example through openings in the walls of the heater, away from the abovementioned inlets and the supply zone. This passage may lead into the secondary air supply means, if desired, so that secondary and tertiary air enter the combustion zone at the same locations.

The hopper may be a suitably dimensioned chamber at the opposite side of the baffle to the combustion zone, and the ignition zone may be a cavity at the bottom of the combustion zone and hopper so that the chamber in the
refractory means has a generally U-shaped configuration.
This arrangement is particularly suitable for smaller
heaters, such as domestic heaters in which the opening in
the refractory means at the bottom of the ignition zone,
has an area of from 200 to 800cm$^2$, eg about 300 cm$^2$.

The hopper may be closed at its upper end by a
lid, which may be openable so that solid fuel can be introduced into the hopper.  The lid may be a lower lid of a
double-lid assembly comprising the lower lid and an upper
lid spaced from the lower lid by a leakage cavity.  The
lids may be connected by a lost-motion connector, such as
a chain of suitable length, so that the upper lid opens
first and the lower lid only begins to open when the upper
lid has been opened to a suitable extent.  A smoke vent
may then extend from the leakage chamber to the supply zone
so that smoke leading into the leakage chamber tends to be
drawn into the supply zone to mix with the air for combustion.  This can reduce the likelihood of smoke escaping
through the hopper when the lids are opened.

The heater may be such that air flowing from the
combustion zone can follow a sinuous path and enter a
heat exchange chamber for transferring heat, for example,
fresh air, before the combustion gases leave the heater
assembly.  If desired, the heat can be used to heat water
in a boiler.

If combustion gases are made to follow a
sinuous path before leaving the heater assembly, for example
by passing over a rear part of the refractory means, downwardly past a baffle bordering a heat exchange chamber at
the back part of the assembly and then upwardly into a
flue outlet, fly ash will tend to separate from the combustion gases and will fall to a fly ash collection zone at
the bottom of the heat exchange chamber.  This collection
zone may be provided at the bottom of the assembly.  An opening may be provided in the front of the assembly and
connected to the fly ash collecting zone by a suitable
passage for enabling fly ash to be removed from the
assembly through a door at the front of the assembly.

The heater may have an outer convection
assembly comprising means defining upwardly extending convection passages at the outer part of the assembly. These
passages may be defined between walls containing the refractory means and suitable channel elements attached to these
walls.  In practice, carriers may be mounted on the walls
and the channel elements may be provided with formations
for engaging the carriers to attach the elements to the
walls.  Clips may fit onto adjacent elements to hold them
against one another and the elements may be trapped on the
carriers by a cover piece secured to the brackets on at
least some of the walls.

Embodiments of the invention will now be descrbed,
by way of example, with reference to the accompanying
drawings, in which
    Figure 1 is a three-dimensional view from the front
of a heater according to the invention;
    Figure 2 is a partly enlarged, exploded view of the
heater;
    Figure 3 is a schematic side view through the heater
on the line III-III in Figure 2;  and
    Figure 4 illustrates a pre-heater arrangement which
may be used in a heater of the invention.

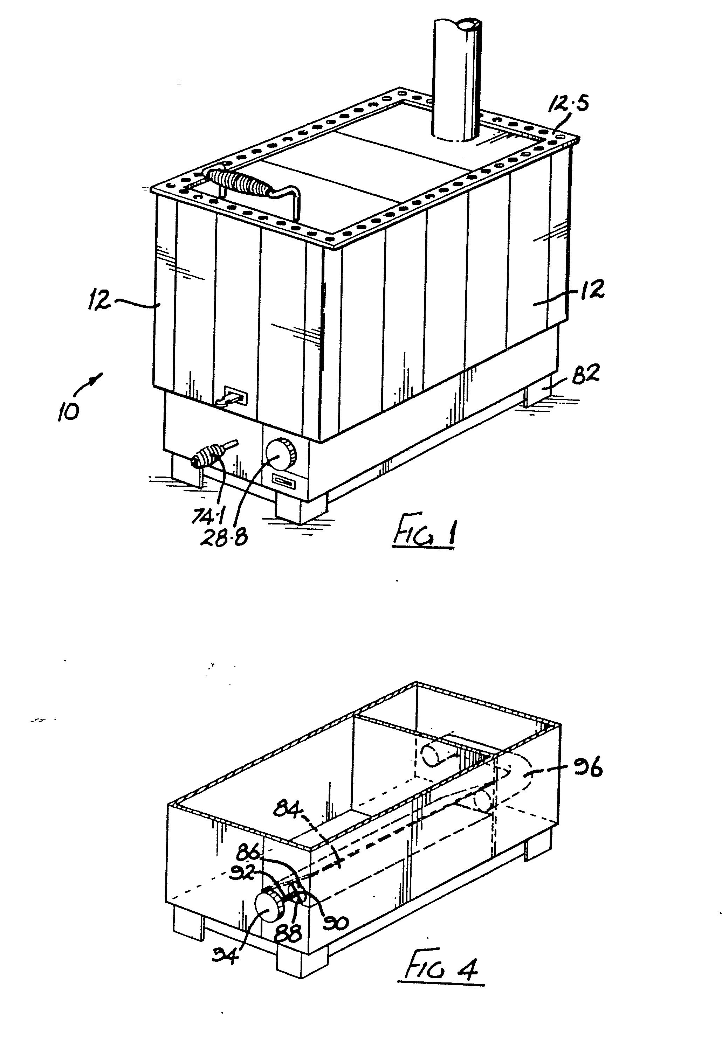

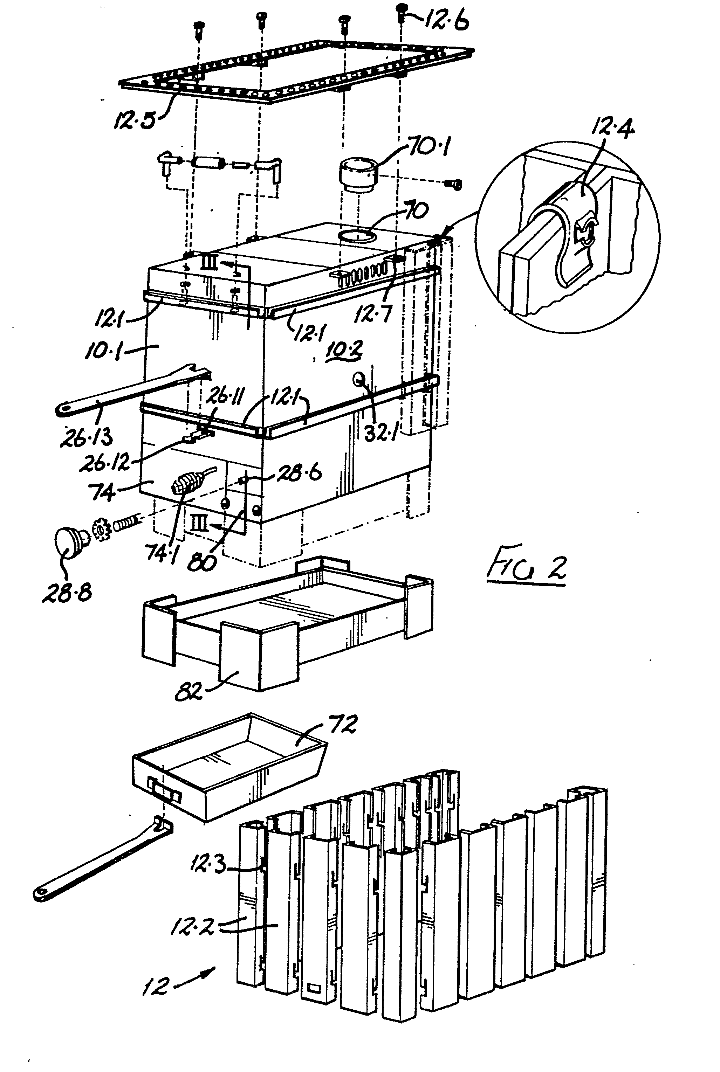

Referring firstly to Figures 1 to 3, a heater
includes a housing 10 which is provided with a cladding 12
on its front and sides, the cladding being shown in more
detail in Figure 2.

The heater has a front wall 10.1, side walls 10.2
and a rear wall 10.3.  Carriers 12.1 in the form of
channel sections are mounted on the walls 10.1 and 10.2,
and channel elements 12.2 are carried by these carriers.

The elements 12.2 include slots 12.3 for fitting on the carriers 12.1 and locating the channel elements. When the channel elements have been located on the carriers 12.1, suitable clips 12.4 (shown on an enlarged scale), can be fitted over the tops and bottoms of the elements to hold the elements against one another, and the elements may then be trapped in position by a cover piece 12.5 which fits onto the top of the elements 12.2 and is held in position by bolts 12.6 screwed into brackets 12.7 on the side walls 10.2 of the heater.

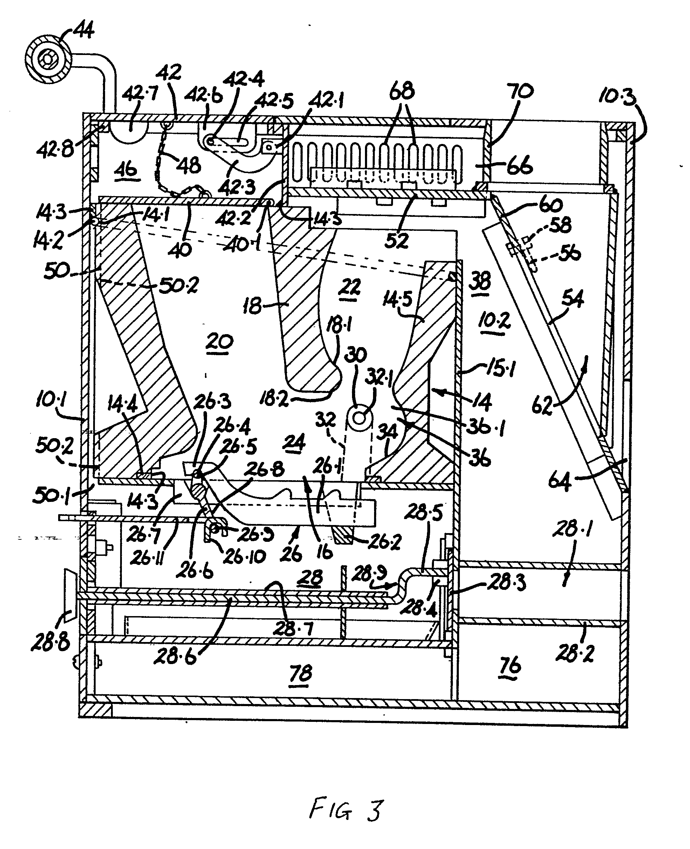

The heater shown is intended for burning solid fuel, such as coal, and for this purpose includes a refractory burner unit 14 shown in Figure 3. The unit 14 is cast from a suitable refractory material and is shaped to fit into a cavity above a base 15 and flush against a back wall 15.1 and the side walls 10.2 of the heater, the unit resting flat on the base 15. The unit is intended to be inserted into the heater from the front of the heater, and for this purpose the front wall 10.1 can be removed to permit the unit 14 to be inserted, and can subsequently be replaced and bolted in position.

A peripheral groove 14.1 is formed in the outer surface of the unit 14 and receives a sealing element 14.2, such as a suitable thermally resistant glassfibre cord, for forming a partial seal between the unit 14 and the front wall 10.1, side walls 10.2 and wall 15.1. The seal is enhanced by heat-resistant putty 14.3 placed along the edges of the unit 14 and in a recess 14.4 where the inner edge of the unit 14 meets the base 15.

The unit 14 provides a cavity 16 divided by a generally upwardly extending baffle 18 to form a U-shaped chamber. The chamber provides a hopper 20 on one side of the baffle, a combustion zone 22 on the opposite side of the baffle, and an ignition zone 24 where fuel from the hopper is to be ignited.

A grate 26 is provided below the ignition zone for supporting solid fuel. The grate 26 comprises parallel elements 26.1 (only one of which is shown), slidably mounted in a guide 26.2 and having retaining portions 26.3 with recesses 26.4 engaging over alternately upper and lower complementary formations 26.5 on a lever 26.6. The elements 26.1 are individually replaceable in the guide 26.2 and on the formations 26.5.

As shown in Figure 3, the lever 26.6 is pivotally mounted on side plates 26.7 of the heater and includes spaced longer limbs 26.8 connected by a transverse bar 26.9. An inverted channel element 26.10 of a riddle bar 26.11 fits onto the transverse bar 26.9 and is movable backwards and forwards to pivot the lever 26.6 and to cause the elements 26.1 of the grate to move with respect to adjacent elements and to shake materials supported on the grate. The riddle bar is provided with an outer formation 26.12 for engagement by a handle 26.13 to facilitate cleaning of the grate.

The grate 26 allows primary air to flow into the ignition and combustion zones from an air supply zone 28 beneath the grate. To allow air to enter the supply zone 28, an air inlet passage 28.1 passes through the back of the heater and through a feed pipe 28.2 to the supply zone 28. A valve comprising a slidable control flap 28.3 is provided for controlling the flow of air from the passage 28.1 into the zone 28. The flap 28.3 is provided with a pair of spaced operating plates 28.4 (only one of which is shown) and one end 28.5 of a control rod 28.6 extends between these plates. The major part of the rod 28.6 is received within a locating sleeve 28.7, and the rod extends to the front of the heater, where it is provided with a control knob 28.8. The arrangement is such that when the knob 28.8 is rotated, the rod 28.6 also rotates. As the rod is cranked at 28.9, this causes the end 28.5 of the rod to move in an arc, moving with it the plates 28.4 and the flap 28.3. The flap, rod and plates 28.4 are arranged so that the rotation of the knob causes the flap 28.3 to obstruct the passage 28.1 to a greater or lesser extent according to the position of the knob and rod. The supply of air into the zone 28 is thus controlled.

Secondary air inlets 30 are provided at opposite sides of the combustion zone 22 at the lower end of the zone for allowing air to enter the combustion zone from the supply zone through communicating passages 32. Only one inlet and one passage 32 are shown in Figure 3. The passages 32 are formed between the unit 14 and the walls 10.2 by providing suitable grooves in the unit 14 leading from the bottom of the unit to the inlets 30. If necessary, openings may be provided in the base 15 to allow air to enter the passages 32.

As the air entering the passages 32 flows from the supply zone 28, it will be appreciated that the supply of air to the secondary air inlets 30 is dependent on the supply of air into the supply zone. The operation of the control flap 28.3 therefore controls the flow of primary air through the grate 26 and the flow of secondary air through the inlets 30. As all of the air flows through the supply zone 28, it tends to be pre-heated before entering the ignition zone or combustion zone, as the case may be.

For certain combustion conditions, it may necessary for a continuous supply of air to enter the combustion zone independently of the supply of air through the supply zone 28. For this purpose, passages 32.1 provided by holes in the side walls 10.2 may be formed to allow tertiary air to enter the passage 32 and inlets 30 on a continuous basis so that tertiary air is supplied to the combustion zone. The size of the passages 32.1 will be pre-selected according to the particular combustion conditions under which the heater is to be used.

Referring to the unit 14 in more detail, it will be seen that the baffle 18 is curved as it extends downwardly and that it ends with a nose portion 18.1 slightly above and to one side of the openings 30. This nose has a lower surface 18.2 facing towards an opposite concave wall surface 34 of the unit 14. The lower part of the baffle 18 and the wall surface 34 define a passage 36 initially inclined upwardly away from the ignition zone 24 and then curving around the lower part of the baffle towards a restriction 36.1 before entering the upper, wider, main part of the combustion zone. After widening towards its upper end, the combustion zone 22 communicates with a heat exchange chamber 38 over a back wall 14.5 of the refractory unit 14.

The hopper 20 is a chamber on the opposite side of the baffle to the combustion zone, and the ignition zone is a cavity at the bottom of the combustion zone and the hopper, the ignition zone opening downwardly towards the grate 26.

The hopper is closed at its upper end by a lid 40, which is the lower lid of a double-lid assembly also including an upper lid 42 provided with a handle 44. The upper lid is mounted on brackets 42.1 on a mounting plate 42.2 by hinged arms 42.3 with locating pins 42.4 received in slots 42.5 in mounting plates 42.6 secured to the lid 42. This arrangement allows the lid to be pivoted to open and rearwardly to rest partially on the upper surface of the heater when access to the hopper is required. The upper lid is provided with a locating piece 42.7 which engages a seal 42.8 extending around the periphery of the upper opening which is normally closed by the lid 42.

The lower lid 40 is pivotally mounted in the heater on pivot pins 40.1 in any suitable manner, and is connected to the upper lid by a lost-motion connector in the form of a chain 48. The arrangement is such that the upper lid can be opened freely to a limited extent before the chain acts on the lower lid. This means that the lower lid will only begin to open when the upper lid has been opened to that limited extent. A smoke vent 50 is provided by holes 50.1 in the housing and grooves 50.2 in the unit 14 and extends from a leakage cavity 46 between the lids downwardly to the supply zone 28. With this arrangement, smoke leading into the leakage chamber tends to be drawn into the supply zone and to mix with the air being supplied for combustion.

During combustion of fuel in the ignition zone and the combustion zone, flue gases pass from the combustion chamber beneath a top plate 52 into the heat exchange chamber 38, from where they are forced to flow through an opening 54 in a baffle 60 and then into a flue outlet 62. The baffle 60 can serve as a choke to limit the flow rate of gases through the heater and to control combustion to suit different atmospheric conditions. If desired, a bolt-on choke-adjusting plate 56 (shown in chain lines) can be bolted onto the baffle by bolts 58 to restrict flue flow further. Air inlet openings 54, for air to be heated, open into the back of the chamber and allow air to pass on opposite sides of flue outlet 62 so that air flows past the flue outlet and against the baffle 60, and then through a further heat exchange chamber 66 above the top plate 52 before leaving the unit through openings 68. The plate 52 is provided with ribs to enhance heat transfer. Thus, fresh heated air is supplied into a room containing the heater assembly while flue gases can escape through the flue outlet 62 into a chimney outlet 70 and then be exhausted. For certain purposes, it may be necessary to provide the chimney outlet with an adaptor 70.1 for connecting the chimney outlet to a chimney pipe.

In order to inhibit undesirable air flow within the heater, the baffle 60, base, side and back walls, and also the top plate 52, can be joined by continuous welding.

This, together with the provision of a sealing cord 14.2 and putty 14.3, can enable the heater to be banked for a considerable amount of time compared with a similar heater without these features since air leakage is considerably eliminated.

It will be appreciated that a boiler or other suitable heat exchange unit may be included in the heater assembly, eg in the chamber 66 and in the region of chamber 38, for heating water, if desired.

In order to allow ash to be removed from the heater, the heater is provided with a collection tray 72, which can be removed from the heater through a hinged door 74 with a handle 74.1. The door is hinged about a vertical axis and forms a substantially air-tight seal when in its closed condition. In addition, a fly ash collection zone 76 is provided at the bottom of the chamber 38 and access to this zone is by way of a passage 78 which is also substantially sealingly closed by a fly ash door 80. Fly ash can thus be removed through the door 80, preferably by a suction device.

The heater is provided with a stand 82 for enabling it to be mounted above the ground.

In an alternative embodiment of the invention, where it is desirable for primary air to be heated to a greater extent before entering the supply zone 28, a passage 84, similar to the fly ash passage 78, may be provided above the fly ash passage. An opening 86 may be provided in the front of the heater for enabling air to enter this passage and a spider arrangement 88 may be formed in the opening. This spider arrangement can include a centrally located nut 90 into which is screwed a threaded shaft 92 carrying a closure disc 94. The closure disc can be screwed towards or away from the opening 96 to control flow of air into the passage 84. A communication tube 96 may be provided at the back of the passage 84 and may communicate with the rear of the supply zone 28 for
allowing air to flow from the passage into the supply zone
28, without mixing with flue gases in the chamber 38.
However, the arrangement does allow air to be pre-heated as
it flows through the passage 24 and the tube 96.

As the supply of air is controlled by the disc
94, the flap 28.3 and the components controlling its move-
ment can be eliminated.

- 13 -

0065880

CLAIMS

1.        A heater for burning solid fuel, the heater including refractory means providing a cavity divided by a generally upwardly extending baffle, the cavity comprising a hopper on one side of the baffle for holding fuel to be burnt, a combustion zone at least partly on the other side of the baffle, and an ignition zone where fuel from the hopper is ignited; characterized by the combination of a grate (26) beneath the ignition zone (24) for allowing primary air to flow into the ignition and combustion zones from a supply zone (29) beneath the grate, and means (32) for supplying secondary air from the supply zone to the combustion zone (22) through at least one opening (30) in the refractory means.

2.        A heater according to Claim 1, characterized by a preheater passage (84,96) leading to or including the supply zone (28) and leading to the grate (26).

3.        A heater according to Claim 1 or 2, characterized in that the refractory means of the heater comprises a unit (14) cast from refractory material, and that the unit has been inserted into the assembly from the front of the assembly and is replaceable, the refractory means resting on a suitable base (15) and being located in position by back and side walls (15.1,15.2).

4.        A heater according to Claim 3, characterized in that seals (14.2,14.3) are provided around edges of the unit and around the periphery of the unit.

5.        A heater according to any preceding claim, characterized in that the means for supplying secondary air comprises openings (30) in the refractory means at opposite sides of the combustion zone, and in that passages (32) leading to the openings are formed between the refractory means and walls of the heater locating the refractory means by providing suitable downwardly extending grooves extending from the openings in the refractory means.

6.      A heater according to any preceding claim, characterized in that at least one inlet (28.1) opens into the supply zone (28) to allow air to be drawn into the supply zone so that primary air can pass upwardly through the grate, a control valve (28.3) operable from the front of the heater being provided to control the supply of secondary air.

7.      A heater according to Claim 6, further characterized by tertiary supply means comprising openings (32.1) in the walls of the heater, away from the abovementioned inlet and the supply zone.

8.      A heater according to any preceding claim, characterized in that the hopper is a suitably dimensioned chamber at the opposite side of the baffle to the combustion zone, and the ignition zone is a cavity at the bottom of the combustion zone and hopper so that the chamber (16) in the refractory means has a generally U-shaped configuration, and in that an opening is provided in the refractory means at the bottom of the ignition zone, the opening having an area of from 200 to 800 $cm^2$.

9.      A heater according to any preceding claim, characterized in that the hopper is closed at its upper end by a lid (40), which is openable so that solid fuel can be introduced into the hopper, the lid being a lower lid of a double-lid assembly comprising the lower lid and an upper lid (42) spaced from the lower lid by a leakage cavity.

10.      A heater according to any preceding claim,
further characterized by an outer convection assembly (12)
defining upwardly extending convection passages at the
outer part of the assembly, theconvection passages being
defined between walls containing the refractory means and
suitable channel elements (12.2) attached to these walls,
carriers (12.1) being mounted on the walls and the channel
elements being provided with formations for engaging the
carriers to attach the elements to the walls.

FIG 1

FIG 4

2/3

0065880

Fig 2

FIG 3

European Patent
Office

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| X | DE – U – 1 772 208 (GOMA GMBH) <br> * complete document * <br> -- | 1,5-8 |
| A | US – A – 2 348 933 (SEELEY) <br> * fig. 1, positions 56, 58, 59 * <br> -- | 9 |
| A | FR – A – 845 368 (PERBAL) <br> * fig. 1 to 3 * <br> ---- | 10 |

**CLASSIFICATION OF THE APPLICATION (Int. Cl. 3)**

F 24 B    5/02

F 24 B    1/08

F 24 B    13/02

**TECHNICAL FIELDS SEARCHED (Int.Cl. 3)**

F 23 L    9/00

F 23 M    5/00

F 24 B    1/00

F 24 B    5/00

F 24 B    13/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 12-07-1982 | PIEPER |

EPO Form 1503.1   06.78